# EUROPEAN PATENT APPLICATION

(11) **EP 4 682 215 A1**
(43) Date of publication of application: **21.01.2026**
(21) Application number: 24770979.3
(22) Date of filing: 14.03.2024
(51) Int. Cl.: C09J 7/38, C09J 7/10, C09J 11/04, C09J 133/04, C09J 193/04

(54) **DOUBLE-SIDED ADHESIVE TAPE**

(30) Priority: 16.03.2023 JP 2023042206
(71) Applicant: Sekisui Chemical Co., Ltd., Osaka-shi, Osaka 530-8565 (JP)
(72) Inventor: KURODA, Yasuyoshi, Inukami-gun, Shiga 522-0314 (JP); FUKUMOTO, Yuuichirou, Inukami-gun, Shiga 522-0314 (JP); YAMAMOTO, Hiroki, Inukami-gun, Shiga 522-0314 (JP); KATAOKA, Hiroyuki, Inukami-gun, Shiga 522-0314 (JP)
(74) Representative: Ter Meer Steinmeister & Partner
(86) International application number: PCT/JP2024/010043
(87) International publication number: WO 2024/190876

(57) **Abstract**

The double sided pressure-sensitive adhesive tape of the present invention includes a pressure-sensitive adhesive layer containing an acrylic pressure-sensitive adhesive and a coloring agent, wherein the pressure-sensitive adhesive layer has a storage modulus (G') at 150°C of 4.0×10⁴ Pa or more, and the number of aggregates of the coloring agent having a longitudinal length of 5 µm or more in the pressure-sensitive adhesive layer is 15 or less when a 5 cm × 5 cm portion is observed. The present invention can provide a double sided pressure-sensitive adhesive tape having excellent heat resistance and masking properties.

## Description

### Technical Field

The present invention relates to a colored double sided pressure-sensitive adhesive tape.

### Background Art

When providing a pressure-sensitive adhesive coated tape with masking properties or lightproofing properties or when providing it with a predetermined color, a pressure-sensitive adhesive containing a coloring agent may be used. A known conventional technique of a pressure-sensitive adhesive coated tape including a pressure-sensitive adhesive layer obtained by adding a coloring agent to a pressure-sensitive adhesive is, for example, a colored pressure-sensitive adhesive coated sheet described in Patent Literature 1. In this colored pressure-sensitive adhesive coated sheet, a pigment dispersion containing a pigment and a dispersing resin is used as a coloring agent. Examples of the dispersing resin include polyester resin, urethane resin, acrylic resin, polyamide resin, and polyether resin.

### Citation List

### Patent Literature

PTL1: JP 2016-98300 A

### Summary of Invention

### Technical Problem

A substrate -free double sided pressure-sensitive adhesive tape is used in skin-material securing applications for in-car heaters, and the double sided pressure-sensitive adhesive tape is required to have heat resistance. In addition, the double sided pressure-sensitive adhesive tape is further required to have masking properties so as not to allow the inside of the structure to be seen through the skin material.

When the colored pressure-sensitive adhesive coated sheet described in Patent Literature 1 is used in skin-material securing applications for in-car heaters, the heat resistance of the colored pressure-sensitive adhesive coated sheet may be insufficient. While color unevenness is also suppressed by using a pigment dispersion containing a pigment and a dispersing resin as a coloring agent in the colored pressure-sensitive adhesive coated sheet described in Patent Literature 1, a colored pressure-sensitive adhesive coated tape having no transmittance variation is further required so as to enhance the masking properties of the colored pressure-sensitive adhesive coated sheet. In particular, in the case where, for example, the polarity of the pressure-sensitive adhesive layer is increased to enhance heat resistance, it is difficult with a conventional coloring agent to obtain a colored pressure-sensitive adhesive coated tape having no transmittance variation.

Accordingly, an object of the present invention is to provide a double sided pressure-sensitive adhesive tape having excellent heat resistance and masking properties.

### Solution to Problem

As a result of diligent studies, the present inventors have found that the above problems can be solved by using a double sided pressure-sensitive adhesive tape comprising a pressure-sensitive adhesive layer having a predetermined storage modulus at 150°C and having not more than a predetermined number of aggregates of pressure-sensitive adhesive having not less than a predetermined size when a predetermined portion is observed, and accomplished the present invention. That is, the present invention provides the following [1] to [9].
[1] A double sided pressure-sensitive adhesive tape comprising a pressure-sensitive adhesive layer comprising an acrylic pressure-sensitive adhesive and a coloring agent, wherein
   the pressure-sensitive adhesive layer has a storage modulus (G') at 150°C of 4.0×10⁴ Pa or more, and
   the number of aggregates of the coloring agent having a longitudinal length of 5 µm or more in the pressure-sensitive adhesive layer is 15 or less when a 5 cm × 5 cm portion is observed.
[2] The double sided pressure-sensitive adhesive tape according to the above [1], wherein
   the acrylic pressure-sensitive adhesive comprises an acrylic-based polymer (A), and
   the acrylic-based polymer (A) has a dispersity (Mw/Mn) of 2.5 or less.
[3] The double sided pressure-sensitive adhesive tape according to the above [1] or [2], wherein
   the coloring agent comprises a binder, and
   the binder is a rosin-based resin.
[4] The double sided pressure-sensitive adhesive tape according to any one of the above [1] to [3], wherein
   the coloring agent comprises a pigment, and
   the pigment is a black pigment.
[5] The double sided pressure-sensitive adhesive tape according to any one of the above [1] to [4], which is a substrate -free double sided pressure-sensitive adhesive tape.
[6] The double sided pressure-sensitive adhesive tape according to any one of the above [1] to [5], wherein
   the coloring agent comprises a colorant, and
   a content of the colorant in the pressure-sensitive adhesive layer is 0.2 mass% or more and 1.0 mass% or less.
[7] The double sided pressure-sensitive adhesive tape according to any one of the above [1] to [6], wherein the pressure-sensitive adhesive layer has a thickness of 10 µm or more and 50 µm or less.
[8] The double sided pressure-sensitive adhesive tape according to any one of the above [1] to [7], which has a total light transmittance of 50% or less.
[9] The double sided pressure-sensitive adhesive tape according to any one of the above [1] to [8], which is a double sided pressure-sensitive adhesive tape for a vehicle interior part.

### Advantageous Effects of Invention

The present invention can provide a double sided pressure-sensitive adhesive tape having excellent heat resistance and masking properties.

### Description of Embodiments

### [Double sided pressure-sensitive adhesive tape]

The double sided pressure-sensitive adhesive tape of the present invention comprises a pressure-sensitive adhesive layer comprising an acrylic pressure-sensitive adhesive and a coloring agent, wherein the pressure-sensitive adhesive layer has a storage modulus (G') at 150°C of 4.0×10⁴ Pa or more, and the number of aggregates of pressure-sensitive adhesive having a longitudinal length of 5 µm or more in the pressure-sensitive adhesive layer is 15 or less when a 5 cm × 5 cm portion is observed. Accordingly, the double sided pressure-sensitive adhesive tape of the present invention has excellent heat resistance and masking properties.

### (Total light transmittance)

The total light transmittance of the double sided pressure-sensitive adhesive tape of the present invention is preferably 50% or less. When the total light transmittance of the double sided pressure-sensitive adhesive tape is 50% or less, the masking properties of the double sided pressure-sensitive adhesive tape can be further enhanced. From such a viewpoint, the total light transmittance of the double sided pressure-sensitive adhesive tape of the present invention is more preferably 45% or less, even more preferably 43% or less, and yet more preferably 40% or less. The lower limit value of the total light transmittance range of the double sided pressure-sensitive adhesive tape of the present invention is not particularly limited, and is usually 0%. The total light transmittance of the double sided pressure-sensitive adhesive tape can be measured by the method described in the Examples below. The total light transmittance of the double sided pressure-sensitive adhesive tape can be adjusted by the number of aggregates of coloring agent having a longitudinal length of 5 µm or more in the pressure-sensitive adhesive layer when a 5 cm × 5 cm portion of the double sided pressure-sensitive adhesive tape is observed, the content of the coloring agent, and the thickness of the pressure-sensitive adhesive layer.

### (Substrate -free double sided pressure-sensitive adhesive tape)

The double sided pressure-sensitive adhesive tape of the present invention may include a substrate substrate , but from a viewpoint of heat resistance, it is preferably a substrate -free double sided pressure-sensitive adhesive tape. When the double sided pressure-sensitive adhesive tape is a substrate -free double sided pressure-sensitive adhesive tape, cohesive force is more increased, thus resulting in better heat resistance of the double sided pressure-sensitive adhesive tape. Also, when the double sided pressure-sensitive adhesive tape is a substrate -free double sided pressure-sensitive adhesive tape, the thickness of the double sided pressure-sensitive adhesive tape can be more reduced.

When the double sided pressure-sensitive adhesive tape of the present invention includes a substrate , the substrate is not particularly limited, and examples include sheet-like materials such as resin film, nonwoven fabric, and metal foil.

Examples of the resin film include acrylic-based film, PET (polyethylene terephthalate) film, fluororesin film, polyvinyl chloride-based film, AES resin-based film, and ASA resin-based film.

The nonwoven fabric is a nonwoven fabric made of polyamide-based, polyester-based, polyacrylic-based, polyolefin-based, polyurethane-based, or like synthetic resin fiber.

Examples of the metal foil include metal foil of iron and an alloy thereof, metal foil of a metal having a lower electric potential than iron, such as chromium, zinc, titanium, aluminum, or magnesium, and metal foil of a metal having a higher electric potential than iron, such as gold, silver, copper, tin, nickel, or cobalt.

One of such sheet-like materials can be used singly, or two or more can be used in combination. From a viewpoint of processability, such as punching, of the tape, the substrate is preferably a resin film, more preferably a PET film or a fluororesin film, and even more preferably a PET film. Also, from a viewpoint of being capable of readily producing from dense to porous substrate s, from soft to hard substrate s, and from thick to thin substrate s, and from a viewpoint of production costs, a nonwoven fabric is preferable.

### (Pressure-sensitive adhesive layer)

### <Storage modulus (G') at 150°C>

The pressure-sensitive adhesive layer in the double sided pressure-sensitive adhesive tape of the present invention has a storage modulus (G') at 150°C of 4.0×10⁴ Pa or more. With the storage modulus (G') at 150°C of the pressure-sensitive adhesive layer being less than 4.0×10⁴ Pa, the heat resistance of the double sided pressure-sensitive adhesive tape may be insufficient when the double sided pressure-sensitive adhesive tape is used in skin-material securing applications for in-car heaters. From such a viewpoint, the pressure-sensitive adhesive layer in the double sided pressure-sensitive adhesive tape of the present invention preferably has a storage modulus (G') at 150°C of 4.3×10⁴ Pa or more, and more preferably 4.8×10⁴ Pa or more. The upper limit value of the range of the storage modulus (G') at 150°C of the pressure-sensitive adhesive layer in the double sided pressure-sensitive adhesive tape of the present invention is not particularly limited, and is usually 1×10⁶ Pa and more preferably 1×10⁵ Pa. The storage modulus (G') at 150°C of the pressure-sensitive adhesive layer in the double sided pressure-sensitive adhesive tape can be measured by the method described in the Examples below. The storage modulus (G') at 150°C of the pressure-sensitive adhesive layer in the double sided pressure-sensitive adhesive tape can be adjusted by the dispersity (Mw/Mn) of the acrylic-based polymer (A) contained in the acrylic pressure-sensitive adhesive, the acrylic-based monomer species, the acrylic-based monomer composition, the tackifier species, the curing agent species, and the like.

### <Number of aggregates of coloring agent>

When a 5 cm × 5 cm portion of the double sided pressure-sensitive adhesive tape is observed, the number of aggregates of coloring agent having a longitudinal length of 5 µm or more in the pressure-sensitive adhesive layer is 15 or less. The presence of 16 or more aggregates of coloring agent having a longitudinal length of 5 µm or more in the pressure-sensitive adhesive layer when a 5 cm × 5 cm portion of the double sided pressure-sensitive adhesive tape is observed may result in a significantly non-uniform transmittance of the double sided pressure-sensitive adhesive tape and thus poor masking properties of the double sided pressure-sensitive adhesive tape. From such a viewpoint, the number of aggregates of coloring agent having a longitudinal length of 5 µm or more in the pressure-sensitive adhesive layer when a 5 cm × 5 cm portion of the double sided pressure-sensitive adhesive tape is observed is preferably 12 or less, and more preferably 10 or less. The lower limit value of the range of the number of aggregates of coloring agent having a longitudinal length of 5 µm or more in the pressure-sensitive adhesive layer when a 5 cm × 5 cm portion of the double sided pressure-sensitive adhesive tape is observed is not particularly limited, and is, for example, 0. The number of the aggregates of coloring agent can be measured by the method described in the Examples below. The number of the aggregates of coloring agent can be adjusted by the kind of a binder and a solvent of the coloring agent constituting the pressure-sensitive adhesive sheet.

### <Thickness>

The thickness of the pressure-sensitive adhesive layer in the double sided pressure-sensitive adhesive tape of the present invention when the tape is a substrate -free tape is preferably 10 µm or more and 50 µm or less. When the thickness of the pressure-sensitive adhesive layer in the double sided pressure-sensitive adhesive tape is 10 µm or more, the total light transmittance of the double sided pressure-sensitive adhesive tape can be reduced, and the masking properties of the double sided pressure-sensitive adhesive tape can be further enhanced. When the thickness of the pressure-sensitive adhesive layer in the double sided pressure-sensitive adhesive tape is 50 µm or less, the double sided pressure-sensitive adhesive tape can be thin. In the present invention, excellent masking properties can be attained even when the thickness is small. From these viewpoints, the thickness of the pressure-sensitive adhesive layer in the double sided pressure-sensitive adhesive tape of the present invention is more preferably 15 µm or more and 45 µm or less, and even more preferably 20 µm or more and 40 µm or less.

### (Acrylic pressure-sensitive adhesive)

The acrylic pressure-sensitive adhesive contained in the pressure-sensitive adhesive layer of the double sided pressure-sensitive adhesive tape of the present invention preferably contains an acrylic-based polymer (A). Accordingly, the heat resistance of the double sided pressure-sensitive adhesive tape of the present invention can be enhanced.

### <Acrylic-based polymer (A)>

The acrylic-based polymer (A) is a polymer of monomer components comprising at least an acrylic-based monomer. The acrylic-based polymer (A) is preferably a polymer having a polar group.

The polar group has active hydrogen and is preferably a functional group reactable to a cross-linking agent (B) to be described later, and specifically includes a carboxyl group, a hydroxyl group, and an amino group. Of these functional groups, at least one selected from the group consisting of carboxyl groups and hydroxyl groups is preferable, and it is more preferable to contain a carboxyl group. Carboxyl groups and hydroxyl groups have high reactivity to the cross-linking agent (B) to be described later and can easily form a cross-linking structure.

Examples of the acrylic-based polymer (A) specifically include a copolymer of an alkyl (meth)acrylate monomer (A1) and a polar group-containing monomer (A2), or a copolymer of the above monomers (A1) and (A2) and a monomer (A3) other than (A1) and (A2). Of these, a copolymer of an alkyl (meth)acrylate monomer (A1) and a polar group-containing monomer (A2) is preferable.

The term (meth)acrylate is used to mean either or both of acrylate and methacrylate, and the same applies to other similar terms.

Examples of the alkyl (meth)acrylate monomer (A1) include methyl (meth)acrylate, ethyl (meth)acrylate, propyl (meth)acrylate, n-butyl (meth)acrylate, isobutyl (meth)acrylate, tert-butyl (meth)acrylate, 2-ethylhexyl (meth)acrylate, n-octyl (meth)acrylate, isooctyl (meth)acrylate, isononyl (meth)acrylate, isomyristyl (meth)acrylate, stearyl (meth)acrylate, cyclohexyl (meth)acrylate, and isobornyl (meth)acrylate. Of these, 2-ethylhexyl (meth)acrylate is preferable from a viewpoint of enhancing heat resistance.

The monomer (A1) can be used singly, or 2 or more monomers can be used in combination.

Of the monomers (A1), from a viewpoint of enhancing heat resistance, alkyl (meth)acrylates in which an alkyl group has 1 to 12 carbon atoms are preferable, and it is more preferable to comprise alkyl acrylate in which an alkyl group has 2 to 8 carbon atoms. The alkyl acrylate in which an alkyl group has 2 to 8 carbon atoms is, on a basis of the total amount of the monomer (A1), preferably 50 to 100 mass%, more preferably 70 to 100 mass%, and further preferably 90 to 100 mass%.

Of the polar group-containing monomer (A2), examples of the monomers containing a carboxyl group (hereinafter, also referred to as "the carboxyl group-containing monomer (X1)") include acrylic acid, methacrylic acid, and crotonic acid. Of these, at least one selected from the group consisting of acrylic acid and methacrylic acid is preferable from a viewpoint of enhancing heat resistance, and acrylic acid is more preferable.

Further, of the polar group-containing monomer (A2), examples of the monomers containing a hydroxyl group (hereinafter, also referred to as "the hydroxyl group-containing monomer (X2)") include (meth)acrylates having a hydroxyl group such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 5-hydroxypentyl (meth)acrylate, and 6-hydroxyhexyl (meth)acrylate, and allyl alcohol. Of these, from a viewpoint of enhancing heat resistance, (meth)acrylates having a hydroxyl group are preferable, and 2-hydroxyethyl (meth)acrylate is more preferable.

One polar group-containing monomer (A2) can be used singly, or two or more can be used in combination.

The polar group-containing monomer (A2) is preferably at least one selected from the group consisting of the carboxyl group-containing monomers (X1) and the hydroxyl group-containing monomers (X2), and it is more preferable to comprise at least the carboxyl group-containing monomers (X1). Further, the at least one selected from the group consisting of the carboxyl group-containing monomers (X1) and the hydroxyl group-containing monomers (X2) is preferably at least one selected from the group consisting of acrylic acid, methacrylic acid, and 2-hydroxyethyl (meth)acrylate.

The monomer (A3) other than the above (A1) and (A2) is not particularly limited as long as it is copolymerizable with the monomers (A1) and (A2), and examples include styrene derivatives such as styrene, α-methyl styrene, p-methyl styrene, p-chloro styrene, and divinylbenzene, compounds having a vinyl ester group such as vinyl acetate, and vinyl propionate, N-vinylpyrrolidone, N-vinylmorpholine, (meth)acrylonitrile, N-cyclohexylmaleimide, N-phenylmaleimide, N-laurylmaleimide, N-benzylmaleimide, n-propyl vinyl ether, n-butyl vinyl ether, isobutyl vinyl ether, and tert-butyl vinyl ether. The monomer (A3) can be used singly, or 2 or more monomers can be used in combination.

The content of the monomer components in the acrylic-based polymer (A) relative to 100 parts by mass of the alkyl (meth)acrylate monomer (A1) ranges preferably 1 to 20 parts by mass, more preferably 3 to 18 parts by mass, further preferably 5 to 15 parts by mass, and furthermore preferably 5 to 11 parts by mass of the polar group-containing monomer (A2). When a content of the polar group-containing monomer (A2) is within the above ranges, the cross-linking reaction of the polar group and the cross-linking agent (B) easily proceeds. In addition, heat resistance is readily enhanced. Moreover, a content that is not higher than the upper limit value can prevent the acrylic-based polymer (A) from becoming excessively polar, and suitably adjusting the binder of the coloring agent allows the coloring agent to be readily dispersed in the pressure-sensitive adhesive layer.

Further, as described above, the polar group-containing monomer (A2) preferably comprises the carboxyl group-containing monomer (X1). The content of the carboxyl group-containing monomer (X1) in the monomer components constituting the acrylic-based polymer (A) relative to 100 parts by mass of the alkyl (meth)acrylate monomer (A1) ranges preferably 3 to 18 parts by mass, more preferably 3 to 15 parts by mass, and further preferably 5 to 11 parts by mass. When a content of the carboxyl group-containing monomer (X1) is within the above ranges, heat resistance is easily enhanced. Additionally, the cross-linking reaction of the polar group and the cross-linking agent (B) easily proceeds.

The content of the monomer (A3) other than (A1) and (A2) relative to 100 parts by mass of the alkyl (meth)acrylate monomer (A1) is preferably 20 parts by mass or less, more preferably 10 parts by mass or less, further preferably 5 parts by mass or less, and furthermore preferably 2 parts by mass or less.

The total amount of the monomer (A1) and the monomer (A2) in the all monomer components used in the acrylic-based polymer (A) is, from a viewpoint of imparting good adhesion performance of the pressure-sensitive adhesive layer and enhancing heat resistance, preferably 80 mass% or more, more preferably 90 mass% or more, and further preferably 95 mass% or more. The upper limit is 100 mass%.

The acrylic-based polymer (A) has a weight-average molecular weight (Mw) of preferably 300000 to 2000000, more preferably 500000 to 2000000, further preferably 600000 to 1500000, and furthermore preferably 700000 to 1100000. When the weight-average molecular weight is within the above ranges, the adhesive performance of the pressure-sensitive adhesive layer is enhanced, and good heat resistance is likely attained. The weight-average molecular weight can be adjusted by adjusting the content of a polymerization initiator and polymerization conditions such as polymerization temperature, or selecting a polymerization method.

The weight-average molecular weight is a standard polystyrene-based weight-average molecular weight measured by gel permeation chromatography (GPC).

In the present invention, the dispersity (Mw/Mn) of the acrylic-based polymer (A) is preferably low from a viewpoint of heat resistance. The dispersity (Mw/Mn) of the acrylic-based polymer (A) from a viewpoint of heat resistance is preferably 2.5 or less, more preferably 2.2 or less, and even more preferably 2.0 or less. Additionally, the dispersity (Mw/Mn) is, from a viewpoint of production easiness, preferably 1.1 or more. The dispersity (Mw/Mn) can be measured by the same method as the weight-average molecular weight.

It is particularly preferable, from a viewpoint of enhancing heat resistance while thinning the double sided pressure-sensitive adhesive tape, to reduce a dispersity Mw/Mn while increasing a molecular weight of the acrylic-based polymer (A). From such a viewpoint, it is thus particularly preferable that the dispersity is preferably 2.5 or less, more preferably 2.2 or less, and even more preferably 2.0 or less, and that the weight-average molecular weight (Mw) is preferably 300000 to 2000000, more preferably 500000 to 2000000, even more preferably 600000 to 1500000, and yet more preferably 700000 to 1100000. Additionally, it is particularly preferable to adjust a content of the carboxyl group-containing monomer (X1) to be within the above ranges while adjusting a dispersity and a weight-average molecular weight to be within these ranges.

The acrylic-based polymer (A) is the main component of the acrylic pressure-sensitive adhesive and is typically, relative to the whole amount (non-volatile content based) of the acrylic pressure-sensitive adhesive, 50 mass% or more, preferably 55 to 98 mass%, and more preferably 60 to 95 mass%.

The acrylic-based polymer (A) can be obtained by polymerizing the monomer components described earlier by the free radical polymerization method or the living radical polymerization method. Of these, the living radical polymerization method is preferable from a viewpoint of keeping down a dispersity while increasing a molecular weight. Examples of the polymerization method include solution polymerization (boiling point polymerization or constant temperature polymerization), emulsion polymerization, suspension polymerization, and bulk polymerization.

In the free radical polymerization method, the monomer components are polymerized in the presence of a polymerization initiator. Examples of the polymerization initiator include an organic peroxide-based polymerization initiator and an azo-based polymerization initiator.

Examples of the organic peroxide-based polymerization initiator include cumene hydroperoxide, benzoyl peroxide, lauroyl peroxide, octanoyl peroxide, stearoyl peroxide, o-chlorobenzoyl peroxide, acetyl peroxide, t-butyl hydroperoxide, t-butyl peroxyacetate, t-butyl peroxyisobutyrate, 3,5,5-trimethylhexanoyl peroxide, t-butylperoxy-2-ethylhexanoate, and dit-butyl peroxide.

Examples of the azo-based polymerization initiator include 2,2'-azobis(isobutyronitrile), 2,2'-azobis(2-methylbutyronitrile), 2,2'-azobis(2,4-dimethylvaleronitrile), 2,2'-azobis(4-methoxy-2,4-dimethylvaleronitrile), 1,1-azobis(cyclohexane-1-carbonytrile), 1-[(1-cyano-1-methylethyl)azo]formamide, 4,4'-azobis(4-cyanovaleric acid), dimethyl-2,2'-azobis(2-methylpropionate), dimethyl-1,1'-azobis(1-cyclohexanecarboxylate), 2,2'-azobis{2-methyl-N-[1,1'-bis(hydroxymethyl)-2-hydroxyethyl]propionamide}, 2,2'-azobis[2-methyl-N-(2-hydroxyethyl)propionamide], 2,2'-azobis[N-(2-propenyl)-2-methylpropionamide], 2,2'-azobis(N-butyl-2-methylpropionamide), 2,2'-azobis(N-cyclohexyl-2-methylpropionamide), 2,2'-azobis[2-(2-imidazolin-2-yl)propane]dihydrochloride, 2,2'-azobis{2-[1-(2-hydroxyethyl)-2-imidazolin-2-yl]propane}dihydrochloride, 2,2'-azobis[2-(2-imidazolin-2-yl)propane], 2,2'-azobis(2-amidinopropane)dihydrochloride, 2,2'-azobis[N-(2-carboxyethyl)-2-methylpropionamidine]tetrahydrate, 2,2'-azobis(1-imino-1-pyrrolidino-2-methylpropane)dihydrochloride, and 2,2'-azobis(2,4,4-trimethylpentane).

One polymerization initiator can be used singly, or two or more can be used in combination.

The content of the polymerization initiator relative to 100 parts by mass of the monomer components is preferably 0.01 to 10 parts by mass, and more preferably 0.05 to 2 parts by mass.

For carrying out the polymerization, a chain transfer agent can be used other than the polymerization initiator. The chain transfer agent is preferably a thiol compound, and examples include lauryl mercaptan, 2-mercaptoethanol, β-mercaptopropionic acid, octyl β-mercaptopropionate, methoxybutyl β-mercaptopropionate, trimethylolpropane tris(β-thiopropionate), and butyl thioglycolate; propanethiols; buthanethiols: and thiophosphites.

One chain transfer agent can be used singly, or two or more can be used in combination. The content of the chain transfer agent relative to 100 parts by mass of the monomer components is preferably 0.01 to 5 parts by mass, and more preferably 0.05 to 2 parts by mass.

The living radical polymerization preferably uses an organic tellurium polymerization initiator. The organic tellurium polymerization initiator is not particularly limited as long as it is generally used for a living radical polymerization, and examples include an organic tellurium compound and an organic telluride compound.

Examples of the above organic tellurium compound include (methylteranyl-methyl)benzene, (1-methylteranyl-ethyl)benzene, (2-methylteranyl-propy)benzene, 1-chloro-4-(methylteranyl-methyl)benzene, 1-hydroxy-4-(methylteranyl-methyl)benzene, 1-methoxy-4-(methylteranyl-methyl)benzene, 1-amino-4-(methylteranyl-methyl)benzene, 1-nitro-4-(methylteranyl-methyl)benzene, 1-cyano-4-(methylteranyl-methyl)benzene, 1-methylcarbonyl-4-(methylteranyl-methyl)benzene, 1-phenylcarbonyl-4-(methylteranyl-methyl)benzene, 1-methoxycarbonyl-4-(methylteranyl-methyl)benzene, 1-phenoxycarbonyl-4-(methylteranyl-methyl)benzene, 1-sulfonyl-4-(methylteranyl-methyl)benzene, 1-trifluoromethyl-4-(methylteranyl-methyl)benzene, 1-chloro-4-(1-methylteranyl-ethyl)benzene, 1-hydroxy-4-(1-methylteranyl-ethyl)benzene, 1-methoxy-4-(1-methylteranyl-ethyl)benzene, 1-amino-4-(1-methylteranyl-ethyl)benzene, 1-nitro-4-(1-methylteranyl-ethyl)benzene, 1-cyano-4-(1-methylteranyl-ethyl)benzene, 1-methylcarbonyl-4-(1-methylteranyl-ethyl)benzene, 1-phenylcarbonyl-4-(1-methylteranyl-ethyl)benzene, 1-methoxycarbonyl-4-(1-methylteranyl-ethyl)benzene, 1-phenoxycarbonyl-4-(1-methylteranyl-ethyl)benzene, 1-sulfonyl-4-(1-methylteranyl-ethyl)benzene, 1-trifluoromethyl-4-(1-methylteranyl-ethyl)benzene, 1-chlorol-4-(2-methylteranyl-propyl)benzene, 1-hydroxy-4-(2-methylteranyl-propyl)benzene, 1-methoxy-4-(2-methylteranyl-propyl)benzene, 1-amino-4-(2-methylteranyl-propyl)benzene, 1-nitro-4-(2-methylteranyl-propyl)benzene, 1-cyano-4-(2-methylteranyl-propyl)benzene, 1-methylcarbonyl-4-(2-methylteranyl-propyl)benzene, 1-phenylcarbonyl-4-(2-methylteranyl-propyl)benzene, 1-methoxycarbonyl1-4-(2-methylteranyl-propyl)benzene, 1-phenoxycarbonyl-4-(2-methylteranyl-propyl)benzene, 1-sulfonyl-4-(2-methylteranyl-propyl)benzene, 1-trifluoromethyl-4-(2-methylteranyl-propyl)benzene, 2-(methylteranyl-methyl)pyridine, 2-(1-methylteranyl-ethyl)pyridine, 2-(2-methylteranyl-propyl)pyridine, 2-methylteranyl-methyl ethanoate, 2-methylteranyl-methyl propionate, 2-methylteranyl-2-methyl methylpropionate, 2-methylteranyl-ethyl ethanoate, 2-methylteranyl-ethyl propionate, 2-methylteranyl-2-ethyl methylpropionate, 2-methylteranyl acetonitrile, 2-methylteranyl propionitrile, and 2-methyl-2-methylteranyl propionitrile. The methylteranyl group in these organic tellurium compounds can be an ethylteranyl group, an n-propylteranyl group, an isopropylteranyl group, an n-butylteranyl group, an isobutylteranyl group, a t-butylteranyl group, or a phenylteranyl group, and these organic tellurium compounds can be used singly, or 2 or more compounds can be used in combination.

Examples of the above organic telluride compound include dimethyl ditelluride, diethyl ditelluride, di-n-propyl ditelluride, diisopropyl ditelluride, dicyclopropyl ditelluride, di-n-butyl ditelluride, di-sec-butyl ditelluride, di-tert-butyl ditelluride, dicyclobutyl ditelluride, diphenyl ditelluride, bis-(p-methoxyphenyl)ditelluride, bis-(p-aminophenyl)ditelluride, bis-(p-nitrophenyl)ditelluride, bis-(p-cyanophenyl)ditelluride, bis-(p-sulfonylphenyl)ditelluride, dinaphtyl ditelluride, and dipyridyl ditelluride. These organic telluride compounds can be used singly, or 2 or more compounds can be used in combination. Of these, dimethyl ditelluride, diethyl ditelluride, di-n-propyl ditelluride, di-n-butyl ditelluride, and diphenyl ditelluride are preferable.

The azo-based polymerization initiator can be used in addition to the above organic tellurium polymerization initiator within the range of not affecting the effects of the present invention for the purpose of accelerating a polymerization rate. For the azo-based polymerization initiator, the compounds listed above can be used.

In the living radical polymerization, a dispersion stabilizer can be used. Examples of the dispersion stabilizer include polyvinylpyrrolidone, polyvinyl alcohol, methyl cellulose, ethyl cellulose, poly(meth)acrylic acid, poly(meth)acrylic acid ester, and polyethylene glycol.

### <Cross-linking agent (B)>

The acrylic pressure-sensitive adhesive of the present invention preferably comprises a cross-linking agent (B) in addition to the acrylic-based polymer (A) described above. The cross-linking agent (B) is, for example, a component capable of cross-linking the pressure-sensitive adhesive layer by the reaction with the polar group in the acrylic-based polymer (A), thereby easily enhancing the above physical properties.

Examples of the cross-linking agent include an isocyanate-based cross-linking agent, an epoxy-based cross-linking agent, an aziridine-based cross-linking agent, and a metal chelate-based cross-linking agent. Of these, at least one selected from the group consisting of isocyanate-based cross-linking agents and epoxy-based cross-linking agents is preferable, and isocyanate-based cross-linking agents are more preferable.

The isocyanate-based cross-linking agent is not particularly limited as long as it is a compound having 2 or more isocyanate groups in a single molecule, and examples include tolylene diisocyanate, hexamethylene diisocyanate, xylene diisocyanate, 1,5-naphthalene diisocyanate, diphenylmethane diisocyanate, isophorone diisocyanate, xylene diisocyanate, and a tolylene diisocyanate adduct of trimethylol propane. Of these, tolylene diisocyanate and a tolylene diisocyanate adduct of trimethylol propane are preferable.

Examples of the commercial product of an isocyanate-based cross-linking agent include various polyisocyanate compounds such as Coronate L-45E, Coronate L-55E (manufactured by Tosoh Corporation), burette polyisocyanate compounds such as Sumidur N (manufactured by Sumitomo Bayer Urethane Co., Ltd.), polyisocyanate compounds having an isocyanurate ring such as Desmodur IL, HL (manufactured by Bayer AG), and Coronate EH (manufactured by Nippon Polyurethane Industry Co., Ltd.), and an adduct polyisocyanate compound such as Sumidur L (manufactured by Sumitomo Bayer Urethane Co., Ltd.), Coronate L and Coronate HL (manufactured by Nippon Polyurethane Industry Co., Ltd.).

The epoxy-based cross-linking agent is not particularly limited as long as it is a compound having 2 or more epoxy groups in a single molecule, and examples include diglycidyl aniline, diethylene glycol diglycidyl ether, propylene glycol diglycidyl ether, tripropylene glycol diglycidyl ether, 1,6-hexanediol diglycidyl ether, glycerol diglycidyl ether, trimethylolpropane triglycidyl ether, 1,3-bis(N,N-diglycidylaminoethyl)cyclohexane, and N,N,N',N'-tetraglycidyl-m-xylenediamine.

Examples of the commercial product of an epoxy-based cross-linking agent include Desmodur L 75 (C) (manufactured by Sumika Covestro), and E-AX and E-5C (manufactured by Soken Chemical & Engineering Co., Ltd.).

Examples of the aziridine-based cross-linking agent include N,N'-hexamethylene-1,6-bis(1-aziridine carboxyamide), trimethylolpropane-tri-β-aziridinyl propionate, N,N'-diphenylmethane-4,4'-bis(1-aziridine carboxyamide), and trimethylolpropane-tri-β-(2-methyl aziridine)propionate.

Additionally, examples of the metal chelate-based cross-linking agent include chelate compounds wherein a metal atom is aluminum, zirconium, titanium, zinc, iron, tin and the like, and aluminum chelate wherein the center metal is aluminum is preferable. Examples of the commercial product include Aluminum Chelate A and Aluminum Chelate M (manufactured by Kawaken Fine Chemicals Co., Ltd.).

One cross-linking agent can be used singly, or two or more can be used in combination.

The content of the cross-linking agent (B) in the acrylic pressure-sensitive adhesive can be suitably set in accordance with the type of the pressure-sensitive adhesive and is, for example, preferably 0.1 parts by mass or more, more preferably 0.5 parts by mass or more, further preferably 1.0 parts by mass or more, and furthermore preferably 1.5 parts by mass or more, relative to 100 parts by mass of the acrylic-based polymer (A). When a content of the cross-linking agent (B) is set to be these lower limit values or more, the adhesion property of the pressure-sensitive adhesive layer to the fabric becomes good, thereby easily increasing the shear strength described above. The upper limit of the content of the cross-linking agent (B) in the acrylic pressure-sensitive adhesive is not particularly limited and is, for example, 20 parts by mass, and preferably 15 parts by mass, relative to 100 parts by mass of the acrylic-based polymer (A).

### <Tackifier resin (C)>

The acrylic pressure-sensitive adhesive preferably further comprises an tackifier resin (C) in addition to the acrylic-based polymer (A), or the acrylic-based polymer (A) and the cross-linking agent (B). Examples of the tackifier resin (C) include rosin-based tackifier resins such as rosin-based resins, rosin ester-based resins such as polymerized rosin ester resins, and hydrogenated rosin-based resins; terpene-based tackifier resins such as terpene-based resins and terpene-phenolic-based resins; coumarone-indene-based resins; alicyclic saturated hydrocarbon-based resins; C5-based petroleum resins; C9-based petroleum resins; and C5 to C9 copolymer-based petroleum resins. One of these tackifier resins can be used singly, or two or more can be used in combination. Of these, the tackifier resin (C) from a viewpoint of heat resistance is preferably a rosin-based tackifier resin, more preferably a rosin ester-based resin, and even more preferably a polymerized rosin ester resin.

The softening point of the tackifier resin (C) is preferably 135°C or higher. When the softening point of the tackifier resin (C) is 135°C or higher, the heat resistance of the substrate -free double sided pressure-sensitive adhesive tape can be further enhanced. From such a viewpoint, the softening point of the tackifier is more preferably 140°C or higher, and even more preferably 145°C or higher. From a viewpoint of imparting suitable adhesive performance to the pressure-sensitive adhesive, the softening point of the tackifier resin is preferably 165°C or lower, more preferably 160°C or lower, and even more preferably 155°C or lower. The softening point can be measured in accordance with JIS K 2207.

The content of the tackifier resin (C) in the acrylic pressure-sensitive adhesive relative to 100 parts by mass of the acrylic-based polymer (A) is preferably 1 to 50 parts by mass, more preferably 3 to 45 parts by mass, and further preferably 4 to 40 parts by mass. When the content is within the above range, the adhesive strength of the pressure-sensitive adhesive layer can be enhanced while ensuring excellent heat resistance of the pressure-sensitive adhesive layer.

### (Coloring agent)

Adding a coloring agent to the pressure-sensitive adhesive enables masking properties and lightproofing properties to be imparted to the pressure-sensitive adhesive layer, and the pressure-sensitive adhesive layer to be colored. The coloring agent contained in the pressure-sensitive adhesive layer is not particularly limited as long as it contains a colorant, and from a viewpoint of the dispersibility of the coloring agent in the pressure-sensitive adhesive layer, it is preferably a coloring agent containing a binder and a colorant.

### <Binder>

The binder contained in the coloring agent is not particularly limited as long as it can increase the dispersibility of the colorant contained in the coloring agent in the pressure-sensitive adhesive layer. Examples of the binder to be contained in the coloring agent include rosin-based resins, rosin ester-based resins such as polymerized rosin ester resins, hydrogenated rosin-based resins, terpene-based resins, terpene-phenolic-based resins, coumarone-indene-based resins, alicyclic saturated hydrocarbon-based resins, C5-based petroleum resins, C9-based petroleum resins, C5 to C9 copolymer-based petroleum resins, and cellulose acetate such as cellulose acetate butyrate (CAB). One of these binders can be used singly, or two or more can be used in combination. The binder to be contained in the coloring agent may be suitably selected from a viewpoint of enhancing the dispersibility of the colorant contained in the coloring agent in the pressure-sensitive adhesive layer, and of these binders, a rosin-based resin is preferable from a viewpoint of dispersibility.

### <Colorant>

A colorant that is conventionally added to a resin can be used, and a blue, yellow, red, green, purple, white, black, or like colorant can be used. From a viewpoint of the masking properties of the double sided pressure-sensitive adhesive tape, a black colorant is preferable. The colorant may be a pigment, a dye, or the like.

Examples of the pigment used in the coloring agent include black pigments such as carbon black, titanium black, chromium black, cobalt black, and copper-manganese-iron black; copper phthalocyanine pigments such as pigment blue; phthalocyanine-based pigments such as cobalt phthalocyanine pigments; anthraquinone-based pigments; perylene pigments; diketopyrrolopyrrole-based pigments; quinacridone-based pigments; perinone-based pigments; thioindigo-based pigments; isoindoline-based pigments; isoindolinone-based pigments; quinophthalone-based pigments; threne-based pigments; dioxazine pigments; pyrrocholine-based pigments; fluorubine-based pigments; azo-based pigments; calcium carbonate-based pigments; metal oxide-based pigments; Ni complex-based pigments; and other metal complex-based pigments.

Examples of the dye used in the coloring agent include azo dyes, cyanine dyes, triphenylmethane dyes, phthalocyanine dyes, anthraquinone dyes, naphthoquinone dyes, quinoneimine dyes, methine dyes, azomethine dyes, squarylium dyes, acridine dyes, styryl dyes, coumarin dyes, quinoline dyes, and nitro dyes. The dye may be a disperse dye.

Of these colorants, from a viewpoint of the masking properties of the double sided pressure-sensitive adhesive tape, a pigment is preferable, a black pigment is more preferable, and carbon black is even more preferable.

From a viewpoint of the masking properties of the double sided pressure-sensitive adhesive tape and the dispersibility of the colorant, the mass ratio of the binder to the colorant (binder/colorant) is preferably 1.5 or more and 3.2 or less, and more preferably 1.9 or more and 2.7 or less.

To facilitate blending of the coloring agent with the pressure-sensitive adhesive, the coloring agent may further contain a solvent. Examples of the solvent contained in the coloring agent include ethyl acetate and ethanol. Of these solvents, ethyl acetate is preferable.

The solvent content in the coloring agent is preferably 30 mass% or more and 85 mass% or less, and more preferably 40 mass% or more and 65 mass% or less.

The total of the binder content and the colorant content in the coloring agent is preferably 20 mass% or more and 80 mass% or less, and more preferably 40 mass% or more and 60 mass% or less.

### <Colorant content in pressure-sensitive adhesive layer>

The colorant content in the pressure-sensitive adhesive layer is preferably 0.2 mass% or more and 1.0 mass% or less. When the colorant content in the pressure-sensitive adhesive layer is 0.2 mass% or more and 1.0 mass% or less, deterioration of the adhesive properties of the pressure-sensitive adhesive layer due to the blending of the colorant can be suppressed, and also the masking properties of the pressure-sensitive adhesive layer can be enhanced. From such a viewpoint, the colorant content in the pressure-sensitive adhesive layer is more preferably 0.22 mass% or more and 1.0 mass% or less, even more preferably 0.24 mass% or more and 0.7 mass% or less, and particularly preferably 0.25 mass% or more and 0.5 mass% or less.

In the acrylic pressure-sensitive adhesive, additives added to a pressure-sensitive adhesive such as a filler, an antioxidant, a UV protector, a plasticizer, and a viscosity modifier can be suitably added within the range of not affecting the effects of the present invention.

Further, the acrylic pressure-sensitive adhesive can be diluted with an organic solvent and the like. The diluent solvent can be the solvent used when the acrylic-based polymer (A) is synthesized, or the solvent added after the acrylic-based polymer (A) was synthesized.

### [Applications of double sided pressure-sensitive adhesive tape]

Applications of the double sided pressure-sensitive adhesive tape of the present invention are not particularly limited, and is used in a variety of applications such as vehicle exterior parts, building materials, aircraft interior parts, industrial equipment, heat dissipating material parts, train interior parts, and vehicle interior parts, and preferably used in vehicle interior part applications. That is to say, the double sided pressure-sensitive adhesive tape of the present invention is preferably a double sided pressure-sensitive adhesive tape for a vehicle interior part. For example, it is preferably used to secure a vehicle interior part. Examples of the vehicle interior part include in-car panels such as ceiling panels, door panels, and instrument panels, in-car heaters, car air conditioners, door trims, vibration damping members, emblems, decorative films, and waterproofing members. Vehicle interior parts may be secured to a vehicle via, for example, the double sided pressure-sensitive adhesive tape.

Also, the double sided pressure-sensitive adhesive tape of the present invention is preferably used on high-temperature parts such as a heater, parts surrounding an engine, parts surrounding an electric power source, and various electronic parts. The double sided pressure-sensitive adhesive tape of the present invention has high heat resistance, and can maintain good adhesive strength even when used on high-temperature parts.

### [Method for producing double sided pressure-sensitive adhesive tape]

The method for producing the double sided pressure-sensitive adhesive tape is not particularly limited, and the double sided pressure-sensitive adhesive tape can be produced by a conventionally known production method. For example, when the double sided pressure-sensitive adhesive tape is a substrate -free double sided pressure-sensitive adhesive tape, first, a pressure-sensitive adhesive composition that is optionally diluted with an organic solvent or the like is prepared.

Here, when preparing the pressure-sensitive adhesive composition, the components may be stirred in the presence of an organic solvent using a known stirring blade such as a propeller blade, or a known mixer may be suitably used, such that the coloring agent can be sufficiently dispersed. Next, the resulting pressure-sensitive adhesive composition may be applied to a substrate such as a release sheet, and optionally dried by being heated, to form a pressure-sensitive adhesive layer. When applying the pressure-sensitive adhesive composition to a release sheet, the pressure-sensitive adhesive composition is preferably applied to the release surface of the release sheet. Then, another release sheet is attached to the surface, on which no release sheet is disposed, of the pressure-sensitive adhesive layer, and thus a double sided pressure-sensitive adhesive tape sandwiched between two release sheets is obtained.

When the double sided pressure-sensitive adhesive tape includes a substrate , for example, first, a pressure-sensitive adhesive composition that is optionally diluted with an organic solvent or the like is prepared, and the pressure-sensitive adhesive composition may be applied to a substrate such as a release sheet, and optionally dried by being heated, to form a pressure-sensitive adhesive layer. When applying the pressure-sensitive adhesive composition to a release sheet, the pressure-sensitive adhesive composition is preferably applied to the release surface of the release sheet. The pressure-sensitive adhesive layer formed on a substrate such as a release sheet is then attached to a substrate to give a pressure-sensitive adhesive tape having a substrate . Alternatively, the pressure-sensitive adhesive composition may be directly applied to a substrate and optionally dried by being heated to give a pressure-sensitive adhesive tape having a pressure-sensitive adhesive layer on a substrate . Then, by forming a pressure-sensitive adhesive layer on the surface of the substrate on which no pressure-sensitive adhesive layer is formed using any of the above methods, a double sided pressure-sensitive adhesive tape can be prepared.

### Example

Hereinafter, the present invention is described in reference to Examples but not limited to these Examples.

### [Evaluation method]

Concerning the Examples and the Comparative Examples, the measurement and the evaluation of each physical property were carried out by the following procedures.

### <Weight-average molecular weight and number-average molecular weight>

The weight-average molecular weight (Mw) and the number-average molecular weight (Mn) necessary to calculate the dispersity (Mw/Mn) were measured using gel permeation chromatograph (manufactured by Waters Corporation, 2690 Separations Model). A sample was measured by GPC in the above apparatus by the conditions of a flow rate of 1 ml/min and a column temperature of 40°C, and a polystyrene-based molecular weight of the polymer was measured to determine a Mw and a Mn. GPC KF-806L (manufactured by SHOWA DENKO K.K.) was used as the column and a differential refractometer was used as the detector.

### <Thickness>

Measured with a dial gauge.

### <Total light transmittance>

The total light transmittance of a measurement sample obtained by attaching a double sided pressure-sensitive adhesive tape to a glass plate having a thickness of 1 mm was measured in accordance with JIS K 7361 using a haze meter (manufactured by Nippon Denshoku Industries Co., Ltd., product name "Haze Meter NDH4000") in an atmosphere having a temperature of 23°C and a humidity of 50%.

### <Storage modulus (G') at 150°C>

The storage modulus (G') at each temperature was measured under the following conditions using a polymer dynamic viscoelasticity analyzer "itk DVA-200" (manufactured by ITK Co., Ltd.).
Measurement mode: Shear
Heating rate: 3°C/min
Measurement temperature range: 150°C
Set strain: 0.1%
Frequency: 10 Hz

In the present Examples and Comparative Examples, the measurement sample was prepared by molding the pressure-sensitive adhesive composition solution prepared in each example such that the eventually obtained sample had a thickness of 0.1 mm, a width of 0.6 mm, and a length of 10 mm, and drying the sample by heating it under the same conditions as those used when forming the pressure-sensitive adhesive layer in each example.

### <Number of aggregates of coloring agent>

A sample having a size of 5 cm × 5 cm was cut out from the center of the prepared double sided pressure-sensitive adhesive tape and attached to a plain white adherend. The surface to which the double sided pressure-sensitive adhesive tape was attached was observed under a microscope, the aggregates of the coloring agent in the pressure-sensitive adhesive layer within the captured image were identified, the longest distance between two points on the circumference of aggregates of the coloring agent was measured, and the number of aggregates within the captured image where the distance (the longitudinal length of the aggregates) was 5 µm or more was measured.

The image-capturing conditions of the aggregates of the coloring agent were as follows:
- Microscope: manufactured by Keyence Corporation, product name "Digital Microscope VHX-6000"
- Magnification: 500x
When the aggregates are black aggregates, the size of the aggregates within the captured image is measured by the method described below, and when the aggregates have a color other than black, the size is measured by the method described below while, for example, selecting an appropriate RGB value range according to the color and adjusting the lighting.

Specifically, the focus is adjusted within areas of the captured image that appear black, i.e., the thickness of the pressure-sensitive adhesive layer, and an area where the value of √(R²+G²+B²) becomes less than 95 even once is determined as the area of aggregates.
- Shutter speed: Auto 255
- Gain: Preset 0 dB
- Illumination (epi-illumination): 255
- Illumination switching: Ring illumination
- Transillumination: 255
- Lens: ZS200
- Magnification: 500x
- Inclination: 0 degrees
In the Examples and the Comparative Examples of the present application, the aggregates were black, and thus the number of aggregates was measured by the above method.

### <Transmittance variation>

When stirring a coloring agent with a pressure-sensitive adhesive, stirring was performed with a propeller-type stirrer or a disperser-type stirrer, and the total light transmittance was measured at five points in both the width direction and the flow direction using a 30 µm double sided pressure-sensitive adhesive tape. Then, the difference in total light transmittance between each total light transmittance and the average total light transmittance was calculated, and the maximum value of the difference in total light transmittance was evaluated according to the following evaluation criteria:
A: Difference in total light transmittance being 10% or less
B: Difference in total light transmittance being more than 10%

### <Holding power in high-temperature environment>

The holding power of the double sided pressure-sensitive adhesive tape in a high-temperature environment was measured in accordance with JIS Z 1528. Specifically, the double sided pressure-sensitive adhesive tape was cut so as to have a size of 25 mm in width and 100 mm in length, and backed by 23 µm polyimide film to prepare a measurement sample. Then, the measurement sample was attached to a cold-rolled stainless steel plate (SUS304 plate) having a temperature of 23°C, a thickness of 1.5 mm, a width of 25 mm, and a length of 100 mm. At this time, the measurement sample was attached so as to be displaced in the longitudinal direction such that the length of the bonded portion between the measurement sample and the SUS304 plate was 25 mm and that the portion having a length of 75 mm of the measurement sample protruded from the edge of the SUS304 plate. Then, a 2 kg roller was moved back and forth once for pressing, and thus an adhesion test piece was prepared.

The resulting adhesion test piece was left to stand in an atmosphere having a temperature of 23°C and a humidity of 50% RH for 20 minutes. Then, in a thermostatic dryer at 180°C, the SUS304 plate was secured vertically to a test stand such that the portion of the measurement sample protruding from the SUS304 plate hung vertically, and the portion of the measurement sample protruding from the SUS304 plate was suspended vertically for 3 minutes. Thereafter, a 1 kg load was applied to the lower edge of the portion of the measurement sample protruding from the SUS304 plate, and the distance (mm) of the bonded portion displaced was measured after 1 hour.

### <Overall evaluation>

The evaluation criteria for the overall evaluation are as follows:
A: The evaluation of transmittance variation being A, and the high-temperature holding power being 5 mm or less
B: The evaluation of transmittance variation being B, and/or the high-temperature holding power being more than 5 mm

### [Example 1]

### (Preparation of pressure-sensitive adhesive composition)

A tackifier resin, a coloring agent 1, and a cross-linking agent (an isocyanate-based cross-linking agent) were added to an acrylic pressure-sensitive adhesive 1 (manufactured by Otsuka Chemical Co., Ltd., product name "TERPLUS NS002") such that the total amount of the colorant and the binder in the coloring agent 1 was 1 mass%, and the components were mixed using a stirring blade to prepare a pressure-sensitive adhesive composition. The dispersity and the composition of the acrylic-based polymer in the acrylic pressure-sensitive adhesive 1 are as shown in Table 1. The tackifier resin was a polymerized rosin ester resin (a hydroxyl value of 46, a softening point of 150°C, a biological carbon content of 95 mass%).

The coloring agent 1 was a coloring agent containing a rosin-based resin, carbon black, and a solvent (ethyl acetate) (manufactured by Dainichiseika Color & Chemicals Mfg. Co., Ltd., product name "SS Adhesive Ink NT"). The coloring agent 1 had a rosin-based resin content of 35 mass%, a carbon black content of 15 mass%, and a solvent content of 50 mass%.

### (Preparation of double sided pressure-sensitive adhesive tape)

The pressure-sensitive adhesive composition was applied to a release sheet that served as a substrate, then dried by being heated at a temperature of 110°C for 3 minutes, and peeled off from the substrate to give a 30 µm thick double sided pressure-sensitive adhesive tape composed solely of a pressure-sensitive adhesive layer formed from the acrylic pressure-sensitive adhesive.

### [Example 2]

The double sided pressure-sensitive adhesive tape of Example 2 was prepared in the same manner as the double sided pressure-sensitive adhesive tape of Example 1 except that an acrylic pressure-sensitive adhesive 2 (manufactured by Otsuka Chemical Co., Ltd., product name "TERPLUS NS004") was used in place of the acrylic pressure-sensitive adhesive 1.

### [Example 3]

The double sided pressure-sensitive adhesive tape of Example 3 was prepared in the same manner as the double sided pressure-sensitive adhesive tape of Example 2 except that the coloring agent 1 was added to the acrylic pressure-sensitive adhesive 2 such that the total amount of the colorant and the binder in the coloring agent 1 was 2 mass%, and the thickness was changed from 30 µm to 10 µm.

### [Example 4]

The double sided pressure-sensitive adhesive tape of Example 4 was prepared in the same manner as the double sided pressure-sensitive adhesive tape of Example 1 except that the coloring agent was changed to a coloring agent 2, and the coloring agent 2 was added to the acrylic pressure-sensitive adhesive 2 such that the total amount of the colorant and the binder in the coloring agent 2 was 2 mass%. The coloring agent 2 contained a rosin ester, carbon black, and solvents (xylene, ethylbenzene).

### [Example 5]

The double sided pressure-sensitive adhesive tape of Example 5 was prepared in the same manner as the double sided pressure-sensitive adhesive tape of Example 1 except for the amount of the polymerized rosin ester resin added (a hydroxyl value of 46, a softening point of 150°C, and a biological carbon content of 95 mass%) of the tackifier resin.

### [Comparative Example 1]

The double sided pressure-sensitive adhesive tape of Comparative Example 1 was prepared in the same manner as the double sided pressure-sensitive adhesive tape of Example 2 except that a coloring agent 3 was added to the acrylic pressure-sensitive adhesive 2 such that the total amount of the colorant and the binder in the coloring agent 3 was 1.6 mass%. The coloring agent 3 contained cellulose acetate butyrate (CAB), carbon black, and a solvent (ethyl acetate). The coloring agent 3 had a CAB content of 15 mass%, a carbon black content of 5 mass%, and a solvent content of 80 mass%.

### [Comparative Example 2]

### (Preparation of acrylic pressure-sensitive adhesive 3)

Ethyl acetate was added as a polymerization solvent to a reaction vessel and bubbled with nitrogen, and then the reaction vessel was heated to reflux while allowing nitrogen to flow through. Subsequently, a polymerization initiator solution obtained by diluting 0.1 parts by mass of azobisisobutyronitrile as a polymerization initiator 10-fold with ethyl acetate was introduced into the reaction vessel, and 96.9 parts by mass of n-butyl acrylate (BA), 2.9 parts by mass of acrylic acid (AAc), and 0.2 parts by mass of 2-hydroxyethyl acrylate (HEA) were added dropwise over a period of 2 hours. After the dropwise addition was complete, a polymerization initiator solution obtained by diluting 0.1 parts by mass of azobisisobutyronitrile as a polymerization initiator 10-fold with ethyl acetate was again introduced into the reaction vessel, and a polymerization reaction was carried out for 5 hours to give a solution containing a polymer (X1).

Relative to 100 parts by mass (based on non-volatile content) of the above acrylic copolymer solution, 1.4 parts by mass of a cross-linking agent and 14 parts by mass of a polymerized rosin ester resin (a hydroxyl value of 46, a softening point of 150°C, a biological carbon content of 95 mass%) were added to prepare an acrylic pressure-sensitive adhesive 3.

### (Preparation of pressure-sensitive adhesive composition)

The coloring agent 1 was added to the acrylic pressure-sensitive adhesive 3 such that the total amount of the colorant and the binder in the coloring agent 1 was 1 mass%, and the components were mixed using a stirring blade to prepare a pressure-sensitive adhesive composition. The dispersity and the composition of the acrylic-based polymer in the acrylic pressure-sensitive adhesive 3 are as shown in Table 1.

### (Preparation of double sided pressure-sensitive adhesive tape)

The pressure-sensitive adhesive composition was applied to a release sheet that served as a substrate, then dried by being heated at a temperature of 110°C for 3 minutes, and peeled off from the substrate to give a 30 µm thick double sided pressure-sensitive adhesive tape composed solely of a pressure-sensitive adhesive layer formed from the acrylic pressure-sensitive adhesive.

### [Comparative Example 3]

### (Preparation of acrylic pressure-sensitive adhesive 4)

A reactor equipped with a thermometer, a stirrer, a cooling tube, and a dropping funnel was prepared. The reactor was charged with a solution in which a monomer mixture containing n-butyl acrylate (BA) and acrylic acid (AAc) in a ratio shown in Table 1 was dissolved in 100 parts by mass of ethyl acetate. To the mixture was added 0.1 mmol of a lauroyl peroxide polymerization initiator, and polymerization was carried out at 70°C for 5 hours under reflux to give an acrylic-based polymer solution. The dispersity of the acrylic-based polymer (A) was as shown in Table 1.

Relative to 100 parts by mass (based on non-volatile content) of the above acrylic copolymer solution, 2.6 parts by mass of a cross-linking agent and 7 parts by mass of a polymerized rosin ester resin (a hydroxyl value of 46, a softening point of 150°C, a biological carbon content of 95 mass%) were added to prepare an acrylic pressure-sensitive adhesive 4.

### (Preparation of pressure-sensitive adhesive composition)

The coloring agent 3 was added to the acrylic pressure-sensitive adhesive 4 such that the total amount of the colorant and the binder in the coloring agent 3 was 2.7 mass%, and the components were mixed using a stirring blade to prepare a pressure-sensitive adhesive composition. The dispersity and the composition of the acrylic-based polymer in the acrylic pressure-sensitive adhesive 4 are as shown in Table 1.

### (Preparation of double sided pressure-sensitive adhesive tape)

The pressure-sensitive adhesive composition was applied to a release sheet that served as a substrate, then dried by being heated at a temperature of 110°C for 3 minutes, and peeled off from the substrate to give a 50 µm thick double sided pressure-sensitive adhesive tape composed solely of a pressure-sensitive adhesive layer formed from the acrylic pressure-sensitive adhesive.

### [Comparative Example 4]

The double sided pressure-sensitive adhesive tape of Comparative Example 4 was prepared in the same manner as the double sided pressure-sensitive adhesive tape of Example 2 except that the total amount of the colorant and the binder in the coloring agent 1 was 20 mass%.

**Table 1**

| | Acrylic pressure-sensitive adhesive | Pressure-sensitive adhesive composition | | | | | | | | | Kind of coloring agent | Thickness of pressure-sensitive adhesive layer (µm) | Storage modulus (G') at 150°C (Pa) | High-temperature holding power (mm) | Total light transmittance (%) | Number of aggregates having a longitudinal length of 5 µm or more | Evaluation of transmittance variation | Difference in total light transmittance | Overall evaluation |
|---|---|---|---|---|---|---|---|---|---|---|---|---|---|---|---|---|---|---|---|
| | | Pressure-sensitive adhesive | | | | | Additive (relative to 100 parts by mass of non-volatile components of pressure-sensitive adhesive) | | Coloring agent (mass% based on "pressure-sensitive adhesive + additive + coloring agent") | | | | | | | | | | |
| | | Dispersity (Mw/Mn) | BA (parts by mass) | 2EHA (parts by mass) | AAc (parts by mass) | HEA (parts by mass) | Tackifier resin (parts by mass) | Cross-linking agent (parts by mass) | Coloring agent (colorant + binder) (mass%) | Colorant of coloring agent (mass%) | | | | | | | | | |
| Example 1 | Acrylic pressure-sensitive adhesive 1 | 2 | - | 100 | 3 | 0.1 | 34 | 5.5 | 1.0 | 0.3 | Coloring agent 1 | 30 | 4.5×10⁴ | 1 | 35 | 10 | A | 5% | A |
| Example 2 | Acrylic pressure-sensitive adhesive 2 | 2 | - | 100 | 5 | 0.1 | 34 | 4.4 | 1.0 | 0.3 | Coloring agent 1 | 30 | 5.0×10⁴ | 0.5 | 35 | 10 | A | 5% | A |
| Example 3 | Acrylic pressure-sensitive adhesive 2 | 2 | - | 100 | 5 | 0.1 | 34 | 4.4 | 2.0 | 0.6 | Coloring agent 1 | 10 | 5.0×10⁴ | 1 | 45 | 10 | A | 9% | A |
| Example 4 | Acrylic pressure-sensitive adhesive 2 | 2 | - | 100 | 5 | 0.1 | 34 | 4.4 | 2.0 | 0.6 | Coloring agent 2 | 30 | 5.0×10⁴ | 0.5 | 35 | 10 | A | 5% | A |
| Example 5 | Acrylic pressure-sensitive adhesive 2 | 2 | - | 100 | 5 | 0.1 | 15 | 1.9 | 1.0 | 0.3 | Coloring agent 1 | 30 | 5.0×10⁴ | 1 | 35 | 5 | A | 5% | A |
| Comparative Example 1 | Acrylic pressure-sensitive adhesive 2 | 2 | - | 100 | 5 | 0.1 | 34 | 4.4 | 1.6 | 0.4 | Coloring agent 3 | 30 | 5.0×10⁴ | 0.5 | 70 | 30 | B | 40% | B |
| Comparative Example 2 | Acrylic pressure-sensitive adhesive 3 | 6 | 80 | 20 | 3 | 0.2 | 14 | 1.4 | 1.0 | 0.3 | Coloring agent 1 | 30 | 0.5×10⁴ | 25< | 40 | 10 | A | 8% | B |
| Comparative Example 3 | Acrylic pressure-sensitive adhesive 4 | 12 | 100 | - | 11 | - | 7 | 2.6 | 2.7 | 0.7 | Coloring agent 3 | 50 | 3.0×10⁴ | 25< | 70 | 25 | B | 40% | B |
| Comparative Example 4 | Acrylic pressure-sensitive adhesive 2 | 2 | - | 100 | 5 | 0.1 | 34 | 4.4 | 200 | 60 | Coloring agent 1 | 30 | 3.0×10⁴ | 25< | <1 | 10 | A | 5% | B |

| | | | | | | | | | | | | | | | | | | | |
|---|---|---|---|---|---|---|---|---|---|---|---|---|---|---|---|---|---|---|---|
| *BA = n-Butyl acrylate, 2EHA = 2-Ethylhexyl acrylate, AAc = Acrylic acid. The amounts of these in part by mass are relative to 100 parts by mass of (meth)acrylic acid alkyl ester monomer (A1). *The amount of the tackifier resin in part by mass is relative to 100 parts by mass of acrylic-based polymer (A). *The content of the coloring agent is the ratio of the total amount of colorant and binder to the total amount of pressure-sensitive adhesive, additive, and coloring agent. | | | | | | | | | | | | | | | | | | | |

In the double sided pressure-sensitive adhesive tapes of Examples 1 to 5, the pressure-sensitive adhesive layer had a storage modulus (G') at 150°C of 4.0×10⁴ Pa or more. When a 5 cm × 5 cm portion of each double sided pressure-sensitive adhesive tape of Examples 1 to 5 was observed, the number of aggregates of coloring agent having a longitudinal length of 5 µm or more in the pressure-sensitive adhesive layer was 15 or less. Accordingly, the double sided pressure-sensitive adhesive tapes of Examples 1 to 5 had a good evaluation with respect to transmittance variation and also had high high-temperature holding power. It can thus be understood that the double sided pressure-sensitive adhesive tapes of Examples 1 to 5 have both excellent masking properties and excellent heat resistance. On the other hand, when a 5 cm × 5 cm portion of each double sided pressure-sensitive adhesive tape of Comparative Examples 1 and 3 was observed, the number of aggregates of coloring agent having a longitudinal length of 5 µm or more in the pressure-sensitive adhesive layer was 16 or more, and accordingly the double sided pressure-sensitive adhesive tapes had a poor evaluation with respect to transmittance variation. It can thus be understood that the double sided pressure-sensitive adhesive tapes of Comparative Examples 1 and 3 have poor masking properties. In the double sided pressure-sensitive adhesive tapes of Comparative Examples 2, 3, and 4, the pressure-sensitive adhesive layer had a storage modulus (G') at 150°C of less than 4.0×10⁴ Pa, and accordingly the high-temperature holding power was poor. It can thus be understood that the double sided pressure-sensitive adhesive tapes of Comparative Examples 2, 3, and 4 have poor heat resistance.

## Claims

1. A double sided pressure-sensitive adhesive tape comprising a pressure-sensitive adhesive layer comprising an acrylic pressure-sensitive adhesive and a coloring agent
the pressure-sensitive adhesive layer having a storage modulus (G') at 150°C of 4.0×10⁴ Pa or more, and
the number of aggregates of the coloring agent having a longitudinal length of 5 µm or more in the pressure-sensitive adhesive layer being 15 or less when a 5 cm × 5 cm portion is observed.

2. The double sided pressure-sensitive adhesive tape according to claim 1, wherein
the acrylic pressure-sensitive adhesive comprises an acrylic-based polymer (A), and
the acrylic-based polymer (A) has a dispersity (Mw/Mn) of 2.5 or less.

3. The double sided pressure-sensitive adhesive tape according to claim 1 or 2, wherein
the coloring agent comprises a binder, and
the binder is a rosin-based resin.

4. The double sided pressure-sensitive adhesive tape according to any one of claims 1 to 3, wherein
the coloring agent comprises a pigment, and
the pigment is a black pigment.

5. The double sided pressure-sensitive adhesive tape according to any one of claims 1 to 4, which is a substrate -free double sided pressure-sensitive adhesive tape.

6. The double sided pressure-sensitive adhesive tape according to any one of claims 1 to 5, wherein
the coloring agent comprises a colorant, and
a content of the colorant in the pressure-sensitive adhesive layer is 0.2 mass% or more and 1.0 mass% or less.

7. The double sided pressure-sensitive adhesive tape according to any one of claims 1 to 6, wherein the pressure-sensitive adhesive layer has a thickness of 10 µm or more and 50 µm or less.

8. The double sided pressure-sensitive adhesive tape according to any one of claims 1 to 7, which has a total light transmittance of 50% or less.

9. The double sided pressure-sensitive adhesive tape according to any one of claims 1 to 8, which is a double sided pressure-sensitive adhesive tape for a vehicle interior part.
